# EUROPEAN PATENT APPLICATION

(11) **EP 4 542 911 A1**
(43) Date of publication of application: **23.04.2025**
(21) Application number: 24203951.9
(22) Date of filing: 01.10.2024
(51) Int. Cl.: H04L 5/00, H04W 72/0446, H04W 72/23

(54) **SEARCH SPACES FOR GRANT INFORMATION**

(30) Priority: 20.10.2023 FI 20236168
(71) Applicant: Nokia Solutions and Networks Oy, 02610 Espoo (FI)
(72) Inventor: AGRAWAL, Rakshak, 560076 Bangalore (IN); KALYANASUNDARAM, Suresh, 560103 Bangalore (IN)
(74) Representative: DREISS Patentanwälte PartG mbB

(57) **Abstract**

To increase number of candidates, configuration information that at least indicates slots usable for carrying uplink grant information among slots allocatable at least for downlink information may be transmitted or received in a radio resource control information. Said configuration information may be applied to determine, per a slot in a downlink control channel, whether the slot is of a first type that is not for carrying any uplink grant information or of a second type that is for carrying at least uplink grant information. An apparatus may determine a search space for blind decoding for uplink grant information to be a space comprising slots of the second type and not slots of the first type. An apparatus may transmit at least uplink grant information in the slots of the second type and downlink information at least in the slots of the first type.

## Description

### TECHNICAL FIELD

Various example embodiments relate to communication systems.

### BACKGROUND

In wireless communication a physical downlink control channel is used to carry downlink and uplink scheduling information. At every slot in which an apparatus is expected to receive such scheduling information, it needs to perform blind decoding for uplink scheduling information, e.g. uplink grants, and for downlink scheduling information. The blind decoding is performed for all possible downlink control information formats at all possible configured aggregation levels. For example, if the physical downlink control channel is configured for scheduling information with a single monitoring physical downlink control channel symbol, two downlink control information formats DCI_0_1/DCI_1_1 and aggregation levels AL1, AL2, AL4, AL8, AL16 with 5,4,3,2,1 candidates for the respective aggregation levels, the apparatus will attempt (5+4+3+2+1) x 2 = 30 blind decodes in that slot, even if one downlink control information format with one aggregation level is sent over the physical channel. A solution enabling more focused blind decoding is desired.

### SUMMARY

The independent claims define the scope, and different embodiments are defined in dependent claims.

According to an aspect there is provided an apparatus comprising at least one processor and at least one memory storing instructions that, when executed by the at least one processor, cause the apparatus at least to: receive in a radio resource control information configuration information that at least indicates slots usable for carrying uplink grant information among slots allocatable at least for downlink information; apply the configuration information to determine, per a slot in a downlink control channel, whether the slot is of a first type that is not for carrying any uplink grant information or of a second type that is for carrying at least uplink grant information; and determine a search space for blind decoding for uplink grant information to be a space comprising slots of the second type and not slots of the first type.

In one or more embodiments of the aspect, combinable with any embodiment of the aspect, the at least one processor and the at least one memory storing instructions, when executed by the at least one processor, further cause the apparatus to use at least one value for a scheduled offset comprised in the configuration information to determine a slot type.

In one or more embodiments of the aspect, combinable with any embodiment of the aspect, the at least one processor and the at least one memory storing instructions, when executed by the at least one processor, further cause the apparatus to use at least one search space configuration included in the configuration information, a search space configuration specifying the search space either for slots of the first type or for slots of the second type.

In one or more embodiments of the aspect, combinable with any embodiment of the aspect, the slots allocatable at least for downlink information are slots comprising downlink control information in the downlink control channel, and the first type is for downlink grants and the second type is at least for uplink grants.

In one or more embodiments of the aspect, combinable with any embodiment of the aspect, the slots of the second type comprises non-mixed slots for carrying uplink grant information and mixed slots for carrying downlink grant information and uplink grant information, wherein the at least one processor and the at least one memory storing instructions, when executed by the at least one processor, further cause the apparatus determine a search space for blind decoding for downlink grant information to be a space comprising slots of the first type and the mixed slots.

According to an aspect there is provided an apparatus comprising at least one processor and at least one memory storing instructions that, when executed by the at least one processor, cause the apparatus at least to: transmit in a radio resource control information configuration information that at least indicates slots usable for carrying uplink grant information among slots allocatable at least for downlink information; apply the configuration information to determine, per a slot in a downlink control channel, whether the slot is of a first type that is not for carrying any uplink grant information or of a second type that is for carrying at least uplink grant information; transmit at least uplink grant information in the slots of the second type; and transmit downlink information at least in the slots of the first type.

In one or more embodiments of the aspect, combinable with any embodiment of the aspect, the at least one processor and the at least one memory storing instructions, when executed by the at least one processor, further cause the apparatus at least to use at least one value for a scheduled offset comprised in the configuration information to determine a slot type.

In one or more embodiments of the aspect, combinable with any embodiment of the aspect, the at least one processor and the at least one memory storing instructions, when executed by the at least one processor, further cause the apparatus to include to the configuration information, before transmitting the radio resource control information, at least one search space configuration, a search space configuration specifying the search space either for slots of the first type or for slots of the second type.

In one or more embodiments of the aspect, combinable with any embodiment of the aspect, the slots allocatable at least for downlink information are slots comprising downlink control information in the downlink control channel, and wherein the first type is for downlink grants and the second type is at least for uplink grants.

In one or more embodiments of the aspect(s), combinable with any embodiment of the aspect(s), a slot of the second type is either a non-mixed slot for uplink grants or a mixed slot for both downlink grants and uplink grants.

In one or more embodiments of the aspect(s), combinable with any embodiment of the aspect(s), the radio resource control information is for time division duplex communication.

According to an aspect there is provided a method comprising: receiving in a radio resource control information configuration information that at least indicates slots usable for carrying uplink grant information among slots allocatable at least for downlink information; applying the configuration information to determine, per a slot in a downlink control channel, whether the slot is of a first type that is not for carrying any uplink grant information or of a second type that is for carrying at least uplink grant information; and determining a search space for blind decoding for uplink grant information to be a space comprising slots of the second type and not slots of the first type.

According to an aspect there is provided a method comprising: transmitting in a radio resource control information configuration information that at least indicates slots usable for carrying uplink grant information among slots allocatable at least for downlink information; applying the configuration information to determine, per a slot in a downlink control channel, whether the slot is of a first type that is not for carrying any uplink grant information or of a second type that is for carrying at least uplink grant information; transmitting at least uplink grant information in the slots of the second type; and transmitting downlink information at least in the slots of the first type.

According to an aspect there is provided a computer readable medium comprising instructions which, when executed by an apparatus, cause the apparatus to perform at least one of a first process or a second process, wherein the first process comprises at least: receiving in a radio resource control information configuration information that at least indicates slots usable for carrying uplink grant information among slots allocatable at least for downlink information; applying the configuration information to determine, per a slot in a downlink control channel, whether the slot is of a first type that is not for carrying any uplink grant information or of a second type that is for carrying at least uplink grant information; and determining a search space for blind decoding for uplink grant information to be a space comprising slots of the second type and not slots of the first type, wherein the second process comprises at least: transmitting in a radio resource control information configuration information that at least indicates slots usable for carrying uplink grant information among slots allocatable at least for downlink information; applying the configuration information to determine, per a slot in a downlink control channel, whether the slot is of a first type that is not for carrying any uplink grant information or of a second type that is for carrying at least uplink grant information; transmitting at least uplink grant information in the slots of the second type; and transmitting downlink information at least in the slots of the first type.

According to an aspect there is provided a non-transitory computer readable medium comprising instructions which, when executed by an apparatus, cause the apparatus to perform at least one of a first process or a second process, wherein the first process comprises at least: receiving in a radio resource control information configuration information that at least indicates slots usable for carrying uplink grant information among slots allocatable at least for downlink information; applying the configuration information to determine, per a slot in a downlink control channel, whether the slot is of a first type that is not for carrying any uplink grant information or of a second type that is for carrying at least uplink grant information; and determining a search space for blind decoding for uplink grant information to be a space comprising slots of the second type and not slots of the first type, wherein the second process comprises at least: transmitting in a radio resource control information configuration information that at least indicates slots usable for carrying uplink grant information among slots allocatable at least for downlink information; applying the configuration information to determine, per a slot in a downlink control channel, whether the slot is of a first type that is not for carrying any uplink grant information or of a second type that is for carrying at least uplink grant information; transmitting at least uplink grant information in the slots of the second type; and transmitting downlink information at least in the slots of the first type.

According to an aspect there is provided a computer program comprising instructions, which, when executed by an apparatus, cause the apparatus to perform at least one of a first process or a second process, wherein the first process comprises at least: receiving in a radio resource control information configuration information that at least indicates slots usable for carrying uplink grant information among slots allocatable at least for downlink information; applying the configuration information to determine, per a slot in a downlink control channel, whether the slot is of a first type that is not for carrying any uplink grant information or of a second type that is for carrying at least uplink grant information; and determining a search space for blind decoding for uplink grant information to be a space comprising slots of the second type and not slots of the first type, wherein the second process comprises at least: transmitting in a radio resource control information configuration information that at least indicates slots usable for carrying uplink grant information among slots allocatable at least for downlink information; applying the configuration information to determine, per a slot in a downlink control channel, whether the slot is of a first type that is not for carrying any uplink grant information or of a second type that is for carrying at least uplink grant information; transmitting at least uplink grant information in the slots of the second type; and transmitting downlink information at least in the slots of the first type.

### BRIEF DESCRIPTION OF DRAWINGS

Embodiments are described below, by way of example only, with reference to the accompanying drawings, in which
Fig. 1 illustrates an exemplified high-level system architecture;
Fig. 2 illustrates an example functionality of a mobile apparatus;
Fig. 3 illustrates an example functionality of an access network apparatus;
Fig. 4 illustrates an example of information exchange;
Fig. 5 illustrates another example of information exchange;
Fig. 6 shows a result of a simulation;
Fig. 7 shows another result of the simulation;
Fig. 8 is a schematic block diagram;
Fig. 9 is a schematic block diagram;
Fig. 10 is a schematic block diagram; and
Fig. 11 is a schematic block diagram.

### DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the elements are not restricted by the terms. The terms are used merely for the purpose of distinguishing an element from other elements. For example, a first type of a slot could be termed a slot or a slot type or a second type of a slot without departing from the scope of the present disclosure.

5G-Advanced, and beyond future wireless networks aim to support a large variety of services, use cases and industrial verticals, for example unmanned mobility with fully autonomous connected vehicles, other vehicle-to-everything (V2X) services, or smart environment, e.g. smart industry, smart power grid, or smart city, just to name few examples. To provide variety of services with different requirements, such as enhanced mobile broadband, ultra-reliable low latency communication, massive machine type communication, wireless networks are envisaged to adopt network slicing, flexible decentralized and/or distributed computing systems and ubiquitous computing, with local spectrum licensing, spectrum sharing, infrastructure sharing, and intelligent automated management underpinned by mobile edge computing, artificial intelligence, for example machine learning, based tools, cloudification and blockchain technologies. For example, in the network slicing multiple independent and dedicated network slice instances may be created within the same infrastructure to run services that have different requirements on latency, reliability, throughput and mobility. In addition to the above listed features, 6G (sixth generation) networks are expected to adopt short-packet communication, for example. Key features of 6G will include intelligent connected management and control functions, programmability, integrated sensing and communication, reduction of energy footprint, trustworthy infrastructure, scalability and affordability. In addition to these, 6G is also targeting new use cases covering the integration of localization and sensing capabilities into system definition to unifying user experience across physical and digital worlds.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

The examples are described herein using principles and terminology of 5G (fifth generation) without limiting the examples, and the terminology used to the 5G. A person skilled in the art may apply the solutions and examples to other communication systems, for example beyond 5G, e.g. 6G, 7G, provided with necessary properties.

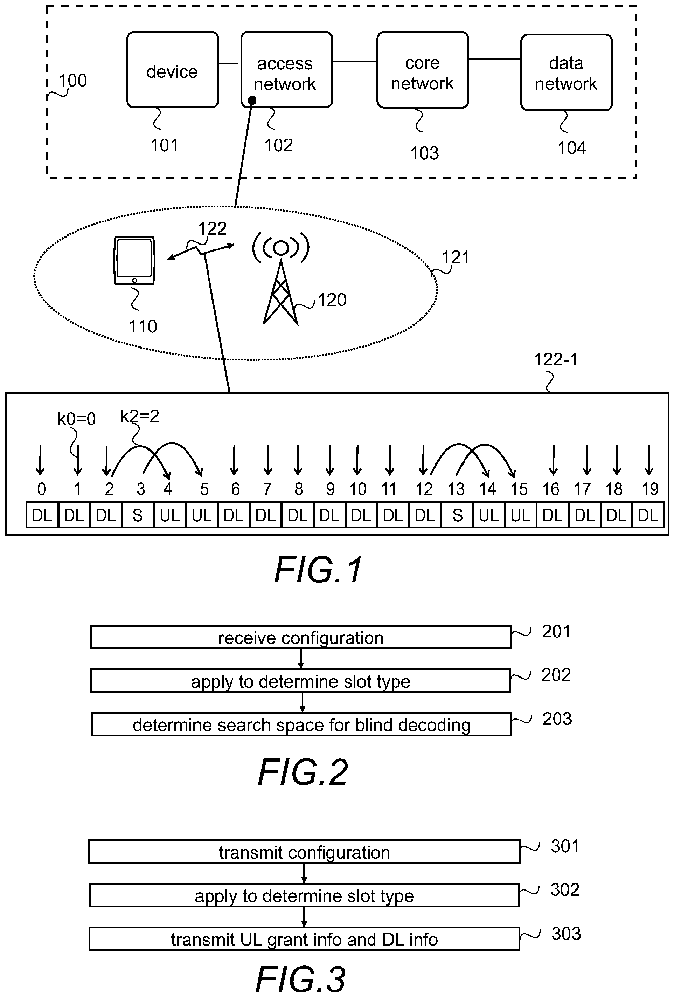

Fig. 1 illustrates an exemplified extremely high-level network architecture only showing some functional entities, all being logical units, whose implementation may differ from what is shown. The connections shown in Fig. 1 are logical connections; the actual physical connections may be different.

Referring to Fig. 1, a wireless network 100, or a system comprising wireless networks, comprises device components 101 for device functionalities in device domain, access network components 102 for access network functionalities in access network domain, core network components 103 for core network functionalities in core network domain, and data network components 104 for data network functionalities in data network domain.

A device component 101 may be any electrical device, or apparatus 110, connectable to an access network and configurable to be in a wireless connection on one or more communication channels 122, including one or more control channels, with an access network component 102, e.g. an access network apparatus 120, providing a cell 121, for example. The physical link from the device component 101 to the access network component 102 towards a core network component 103 is called an uplink or a reverse link and the physical link to the device component is called a downlink or a forward link. By way of example rather than limitation, the device component 101 may referred to as a served apparatus, a downlink apparatus, a mobile apparatus, a terminal device, a communication device, a user equipment (UE), a subscriber station (SS), a portable subscriber station, a mobile station (MS), or an access terminal (AT). A non-limiting lists of examples of the device component 101, or what the device component 101 may comprise or be comprised in, include a mobile phone, a cellular phone, a smart phone, a voice over internet protocol (VoIP) phone, a wireless local loop phone, a device using a wireless modem, a portable computer, a desktop computer, laptop-embedded equipment (LEE), laptop-mounted equipment (LME), a smart device, a multimedia device, an image capture terminal device, such as a digital camera, a gaming terminal device, a music storage and playback appliance, a drone, a vehicle, an automated guided vehicle, an autonomous connected vehicle, a vehicle-mounted wireless terminal device, a wireless endpoint, an internet of things device, an industrial internet of things device, a device operating in an industrial and/or an automated processing chain contexts, a consumer electronics device, a consumer internet of things device, a mobile robot, a mobile robot arm, a sensor, a surveillance camera, an eHealth related device, a medical monitoring device, a medical device, for example for remote surgery, a wearable device, such as a smart watch, a smart ring, a head-mounted display (HMD), an on-person device, etc. The device component may also be part of a group of device components seen as one device component, i.e. one mobile apparatus, by the wireless network.

An access network domain may be based on any kind of an access network, such as a cellular access network, for example 5G network, 5G-Advanced network, 6G network, etc., a non-terrestrial network, a legacy cellular radio access network, for example 4G or older generation network, or a non-cellular access network, for example a wireless local area network, or any combination thereof. To provide the wireless access, the access network comprises access network components 102, such as access network apparatuses 120, or access devices. An access device component 102 may provide one or more cells 121, possibly with different cell accessibility per a cell, but a cell is provided by one access device. However, there may be overlapping cells, for example a macro cell provided by an access device operating in co-operation of access nodes providing smaller cells, such as micro-, femto- or picocells, which overlap at least partly within the macro cell. There are a wide variety of access network components 102. A non-limiting lists of examples of the access network component 102, or what the access network component 102 may comprise or be comprised in, include different types of base stations, such as eNBs, gNBs, split gNBs, transmission-reception points, network-controlled repeaters, nodes operationally coupled to one or more remote radio heads, satellites, donor nodes in integrated access and backhaul (IAB), fixed IAB nodes, mobile IAB nodes mounted on vehicles, for example, etc. At least some of the apparatuses in the access network may provide an abstraction platform to separate abstractions of network functions from the processing hardware.

Further, it should be noted that some of the components may be multi-domain components. For example a device component 101 may also provide services to other device components, i.e. operate also as an access network component 102, for example be a relay node, or a mobile IAB node, or a mobile termination part in an IAB node. Hence, herein term mobile apparatus is used for device components, or device component functionality in a multi-domain component and term access network apparatus is used for access network components or access network component functionality in a multi-domain component.

The core network components 103 form one or more core networks. A core network may be based on a non-standalone core network, for example an LTE-based network, or a standalone access network, for example a 5G core network. However, it should be appreciated that the core network, and the core network components 103, may use any technology that enable network services to be delivered between devices and data networks.

A data network may be any network, like the internet, an intranet, a wide area network, etc. Different remote monitoring and/or data collection services for different use cases may be reached via the data network and the data network components 104.

One of the communication channels 122 is a physical downlink control channel, PDCCH. The physical downlink control channel is for carrying downlink information, e.g. downlink grants (downlink scheduling assignments), and uplink grant information, e.g. uplink grants (uplink scheduling assignments), to specify resources that are allocated (scheduled) to the apparatus 110, so that the apparatus 110 can use the resources in downlink and uplink shared channels, respectively. The access network apparatus 120 transmits radio resource control information comprising configuration information that define a downlink frame structure and, for example, a region for the PDCCH.

In 5G, the PDCCH comprises a common PDCCH, which apparatuses, including the apparatus 110, in the cell 122 should monitor, and one or more apparatus -specific PDCCHs, at least one of which the apparatus 110 should monitor. There are many places within a PDCCH region in the frame, where the common PDCCH and the apparatus -specific PDCCHs can locate, and the apparatus 110 monitors all possible locations by searching said locations and performing blind decoding. A possible location is called a candidate or a PDCCH candidate, and all possible locations that are to be monitored are called a search space, or a search area. The downlink and uplink grants, i.e. scheduling information, is transmitted as downlink control information messages, DCIs, in control channel elements, CCEs. For example, 1, 2, 4, 8, or 16 CCEs may be used, to adapt to the different channel conditions of apparatuses and to adapt to different DCI payload sizes. Aggregation level indicates the number of consecutive CCEs used for the DCI. When the apparatus 110 performs the blind decoding, the apparatus 110 searches across a configured number of candidates of different aggregation levels, DCI formats, within the time-domain and frequency-domain resources configured for the PDCCH, regardless which one(s) of them is(are) used. The larger the number of blind decodes per slot, the more the processing is required by the apparatus. Due to limited processing resources at most apparatuses, there is a limit on the maximum number of blind decodes that the apparatus 110 can be asked to perform in a slot.

A non-limiting example of a time division duplex frame structure 122-1 is illustrated in Fig. 1. The illustrated frame 122-1 is a system frame with 20 slots with a duration of 10 ms. The frame comprises slots allocatable at least for downlink information, denoted by DL, slots allocatable for uplink information, denoted by UL, and slots, called special slots, denoted by S, wherefrom resources are allocatable to uplink information and to downlink information. In the illustrated example of Fig. 1, it is assumed that the configuration information in the radio resource control information has indicated to use for a slot offset parameter k0 a value zero and for a slot offset parameter k2 a value two. The slot offsets represents scheduled offsets between slots of grants and slots of allocated resources indicated in grants, parameter k0 for resources to a shared downlink channel and parameter k2 for resources to a shared uplink channel. In 5G, k0 value indicates the number of time slots between PDCCH/DCI and downlink data transmission on the physical downlink shared channel, the value zero meaning that they can be in the same slot, and k2 value indicates the number or time slots between PDCCH/DCI and uplink data transmission on a physical uplink shared channel. In 5G NR the parameter k0 may have an integer value between 0 to 32, and the parameter k2 may have an integer value between 0 to 32.

When the apparatus 110 determines in advance, for example as will be described in more detail below, which slots may carry DCI for uplink grants, which DCI for downlink grants and which DCI for both uplink grants and downlink grants, the blind decoding may be more focused while remaining within the limits, and the number of candidates can be increased. In other words, in the frame illustrated in Fig. 1, when the apparatus is configured to determine in advance at least a search space for blind decoding for uplink grant information, the search space (or search spaces if a search space is interpreted to be formed by consecutive slots) comprises slots 2, 3, 12, 13, and hence slots 0, 1, 6, 7, 8, 9, 10, 11, 16, 17, 18 and 19 are available for candidates for downlink grants only and slots 2 and 12 can be used also for downlink grants. When the apparatus is not configured to determine in advance at least the search space for blind decoding for uplink grant information, the blind decoding for uplink grant information would be performed also in slots 0, 1, 6, 7, 8, 9, 10, 11, 16, 17, 18 and 19, thereby restricting their use for downlink grant information. In other words, when the apparatus is configured to determine in advance at least the search space for blind decoding for uplink grant information, a number of candidates for different aggregation levels can be increased while staying within given limit on the maximum number of blind decodes. In particular, for slots where there can only be grant information for one direction, the number of candidates can be doubled when compared to the slots when there can be grant information for both directions. For example, the number of candidates in a configuration with aggregation levels 1, 2, 4, 8,16 can be increased from 5,4,3,2,1 in downlink and uplink scheduling slots to 10, 8, 6, 4, 2 in downlink only slots because 10+8+6+4+2= 30 which is still within the 5G maximum limit of 36 blind decodes per slot.

Fig. 2 illustrates an example functionality of an apparatus receiving e.g. the downlink control channel, for example the apparatus 110 illustrated in Fig. 1.

Referring to Fig. 2, the apparatus receives (block 201) in a radio resource control information configuration information that at least indicates slots usable for carrying uplink grant information among slots allocatable at least for downlink information. Using the example of Fig. 1, the slots indicated may be slots 2, 3, 12 and 13, and the slots allocatable at least for downlink information comprises slots 0, 1, 2, 3, 6 to 13, and 16 to 19. The apparatus then applies (block 202) the configuration information to determine, per a slot in a downlink control channel, whether the slot is of a first type that is not for carrying any uplink grant information or of a second type that is for carrying at least uplink grant information. Using the example of Fig. 1, the slots 2, 3, 12 and 13 are determined to be of the second type, and the slots 0, 1, 6, 7, 8, 9, 10, 11, 16, 17, 18 and 19 to be of the first type. It should be noted that the slots of the second type comprises slots 2 and 12 that are for carrying uplink grant information and for carrying downlink information including downlink grant information. In other words, the slots of the second type may comprise non-mixed slots for uplink grant information and mixed slots for both downlink grant information and uplink grant information Then the apparatus determines (block 203) a search space for blind decoding for uplink grant information to be a space comprising slots of the second type and not slots of the first type. Using the example of Fig. 1, the search space is determined to comprise slots 2, 3, 12 and 13.

The first type may be for downlink control information for downlink grants and the second type may be for downlink control information for uplink grants.

In one implementation, the apparatus is configured to perform the blind decoding for uplink grant information (uplink grants) and the blind decoding for downlink grant information (downlink grants) in said search space, but not to perform the blind decoding for uplink information in slots not belonging to the search space. In another implementation, the apparatus is configured to further divide the search space to two search spaces, or determine two search spaces for blind decoding for uplink grant information: a search space (uplink search space) for uplink grant information only in which search space no blind decoding for downlink grant information takes place, and one (mixed search space) to perform the blind decoding for uplink grant information and for downlink grant information. Using the example of Fig. 1 for said implementation, the uplink search space comprises slots 3 and 13, and the mixed search space comprises slots 2 and 12.

In one implementation, combinable with the above implementations, the apparatus is further configured to define another search space, which is a search space for blind decoding only downlink grant information (downlink grants), the search space comprising the slots of the first type. Using the example of Fig. 1, such a search space is determined to comprise slots 0, 1, 6 to 11, and 16 to 19. For example, there may be an "uplink only blind decoding" search space of slots 3 and 13, "downlink only blind decoding" search space of slots 0, 1, 6 to 11, and 16 to 19, and "uplink and downlink blind decoding" search space of slots 2 and 12.

Even though not illustrated in Fig. 2, the apparatus then performs the blind coding using the search space(s). Hence, the apparatus do not blindly decode for uplink grant information, for example, in slots where the uplink grant information cannot occur, i.e. is not transmitted. Thanks to that, the number of blind decoding will be smaller, which results in power consumption savings.

Fig. 3 illustrates an example functionality of an apparatus transmitting downlink control channel, for example the network apparatus 120 illustrated in Fig. 1.

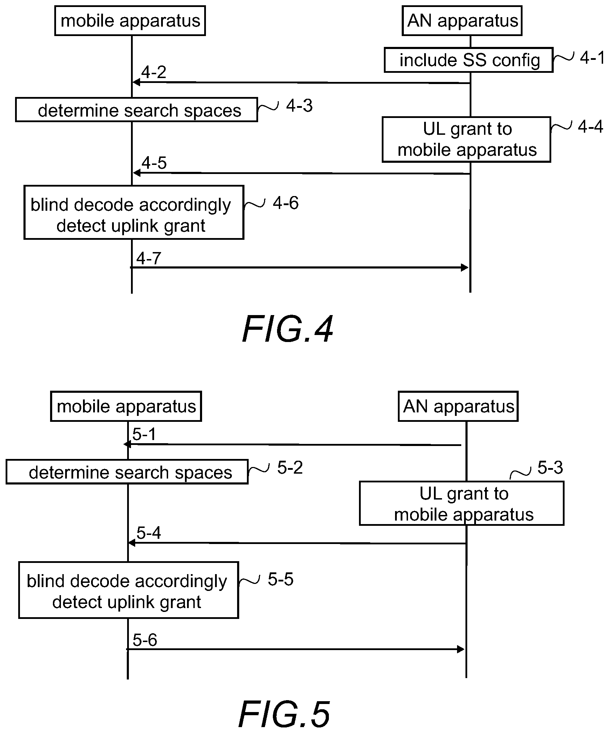

Referring to Fig. 3 the apparatus transmits (block 301) in a radio resource control information configuration information that at least indicates slots usable for carrying uplink grant information among slots allocatable at least for downlink information. The configuration information may be transmitted to one or more apparatuses. Different examples of the configuration information are given below with Fig. 4 and Fig. 5. Further, the apparatus applies (block 302) the configuration information to determine, per a slot in the downlink control channel, whether the slot is of a first type that is not for carrying any uplink information or of a second type that is for carrying at least uplink grant information. The apparatus then transmits (block 303) at least uplink grant information in the slots of the second type and downlink information at least in the slots of the first type. Using the example of Fig. 1, the apparatus may transmit uplink grant information to an apparatus in slot 2, 3, 12 and/or 13, and downlink information in slots 0, 1, 2, 6, 7, 8, 9, 10, 11, 12, 16, 17, 18 and 19.

The apparatus may use the slots of the first type for searching for larger set of candidates, i.e. allocations to more candidates can be transmitted.

In an implementation, the apparatus is configured to use the first type for downlink control information for downlink grants and the second type for downlink control information at least for uplink grants, meaning that the second type may be used also for downlink control information for downlink grants. In another implementation, the apparatus is configured to use the first type for downlink control information for downlink grants and the second type for downlink control information for uplink grants (not for downlink grants), which results that the apparatus may use also the slots of the second type for searching from larger set of candidates. In a still further implementation, there may be slots of the first type for downlink grants, slots of second type for uplink grants and mixed slots, or slots of third type for downlink and uplink grants.

In the non-limiting examples of Fig. 4 and Fig. 5 an information exchange on a high level is illustrated between a mobile apparatus, which depicts an apparatus receiving the physical downlink control channel, and an access network apparatus, AN apparatus, which depicts an apparatus transmitting the physical downlink control channel. In the examples it is assumed that downlink control information for uplink grant is transmitted.

Referring to Fig. 4, in the illustrated example of Fig. 4, it is assumed that the search space may be specified in addition to using downlink control information formats "formats 0-0 and 1-0" and "formats 0-1 and 1-1", both specifying downlink control information for uplink grants and for downlink grants, also formats allowing specifying downlink control information for uplink grants only or for downlink control information for downlink grants only. The format to downlink control information for uplink grants may be a format 0-x, for example format 0-0, format 0-1. In other words, they are formats for second type of slots. Correspondingly, the format for downlink control information may be a format 1-x, for example format 1-0, format 1-1.

In the example of Fig. 4, the AN apparatus includes (block 4-1) to the configuration information, at least one search space (SS) configuration, for example for the example in Fig. 1:
SearchSpace 1: format 0-1 (slots 3 and 13)
SearchSpace 2 : format 1-1 (slots 0, 1, 6 to 11, 16 to 19)
SearchSpace 3: formats 0-1 and 1-1 (slots 2 and 12)

The AN apparatus then transmits in a radio resource control information (message 4-2) configuration information that comprises at least one search space configuration, a search space configuration specifying the search space either for slots of the first type or for slots of the second type, thereby indicating slots that may carry uplink grant information in a downlink control channel comprising slots allocatable for uplink or downlink information. Message 4-2 may be an RRC_configuration message, or an RRC_reconfiguration message, RRC meaning radio resource control.

The mobile apparatus determines (block 4-3), using the at least one search space configuration received in message 4-2, one or more search spaces.

In the illustrated example, an uplink grant is scheduled (block 4-4) by the AN apparatus to the mobile apparatus. The AN apparatus transmits (message 4-5) the uplink grant in a slot of the second type, for example in slot 2, 3, 12 or 13. The mobile apparatus performs (block 4-6) the blind decoding for uplink grants according to the determined search spaces, and detects (block 4-6), the uplink grant and transmits (message 4-7) uplink data to the AN apparatus, to be forwarded by the AN apparatus, in an uplink resource indicated by the uplink grant.

Referring to Fig. 5, in the illustrated example of Fig. 5, it is assumed that the configuration information at least indicating slots usable for carrying uplink grant information among slots allocatable at least for downlink information is configuration information determining a frame structure (frame format).

The AN apparatus transmits in a radio resource control information (message 5-1) configuration information determining a frame structure. Message 5-1 may be an RRC_configuration message, or an RRC_reconfiguration message, RRC meaning radio resource control.

The mobile apparatus determines (block 5-2), using one or more parameter values for a scheduled offset for the frame structure, one or more search spaces. For example, using the frame structure, the mobile apparatus can determine uplink slots (i.e. slots usable for uplink data transmission), and using the value of k2 parameter, or a combination of values of k0 parameter and k2 parameter, the mobile apparatus can determine slots which cannot have uplink grant information. For example, if the current slot index does not correspond to an uplink slot index (carrying uplink information) minus k2 for any of the k2 values configured, then the mobile apparatus can determine that the current slot cannot have uplink grant information. Further, the parameter k2 and/or k0 may have multiple values, which are then applied to further increase variability of search spaces for blind decoding for uplink grant information.

In the illustrated example, an uplink grant is scheduled (block 5-3) by the AN apparatus to the mobile apparatus. The AN apparatus transmits (message 5-5) the uplink grant in a slot of the second type, for example in slot 2, 3, 12 or 13. The mobile apparatus performs (block 5-5) the blind decoding for uplink grants according to the determined search spaces, and detects (block 5-5), the uplink grant and transmits (message 5-6) uplink data to the AN apparatus, to be forwarded by the AN apparatus, in an uplink resource indicated by the uplink grant.

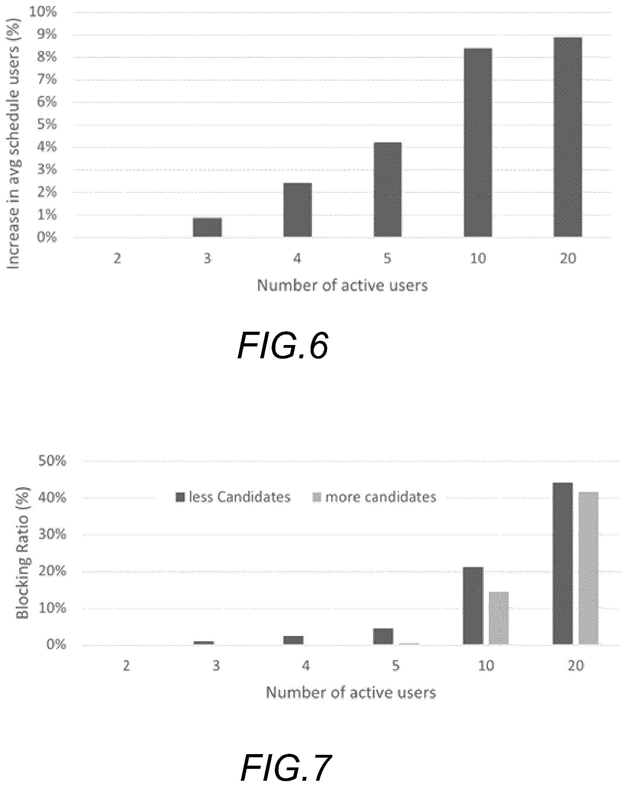

Fig. 6 and Fig. 7 illustrate simulation results when the apparatuses, called users in Fig. 6 and Fig. 7, receiving downlink control channel are configured to determine in advance one or more search spaces for blind decoding at least for uplink grant information not comprising slots that cannot carry uplink grant information. As said above, this enables to increase the number of candidates in slots that are used for downlink only or for uplink only. As can be seen from Fig. 6, as the number of candidates can be increased, the number of users that can be scheduled per slot increases. As can be seen from Fig. 7, also a blocking ratio reduces. The number of candidates compared in simulations of Fig. 7 are for aggregation levels 2, 4 and 8 either two candidates (less candidates) or four candidates (more candidates). Fig. 7 illustrates that while scheduling multiple users which share the same physical downlink control channel, there are more chances of collision or blocking if the number of candidates is less. Thus fewer configured candidates results in fewer scheduled apparatuses per a slot and not being able to schedule apparatuses with higher priority or metrics.

The Fig. 6 and Fig. 7 show also that gains vary depending upon number of active users in the cell.

As can be seen, with the disclosed solutions it is possible to increase the number of candidates for different aggregation levels in a search space so that the blocking probability of apparatuses may be reduced and more apparatuses per a slot may be scheduled. For example, it is possible to double the total number of candidates for downlink only slots, i.e. slots that are not for carrying any uplink grant information, in time division duplex deployments. The same applies for uplink only slots as well, i.e., slots that are not for carrying any downlink grant information. This may boost physical downlink control channel related key performance indicators and improve overall performance. Moreover scheduled apparatuses may be higher in a time division metric priority order, when compared to the baseline (i.e. no separate search spaces), further improving spectral efficiency, fairness, and adherence to quality of service requirements.

The blocks, related functions, and information exchange (messages, signaling) described above by means of Fig. 1 to Fig. 5 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

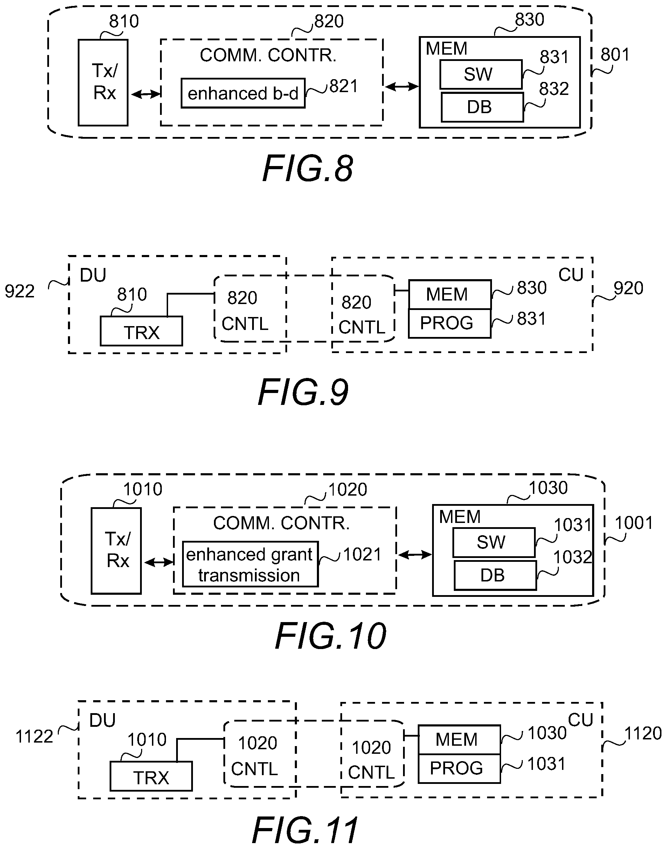

Fig. 8 illustrates an apparatus 801 that may be configured to perform at least determining one or more search spaces for blind decoding according to some embodiments. The apparatus 801 may be a mobile apparatus, or any other device component, examples of which are listed above. Fig. 9 illustrates an apparatus that may implement distributed functionality of the apparatus illustrated in Fig. 8. Fig. 10 illustrates an apparatus, e.g. an access network apparatus or any other access network component, examples of which are listed above, that may be configured to at least transmit to apparatuses radio resource control information. Fig. 11 illustrates an apparatus that may implement distributed functionality of the apparatus illustrated in Fig. 10.

According to an embodiment, there is provided an apparatus comprising means for receiving in a radio resource control information configuration information that at least indicates slots usable for carrying uplink grant information among slots allocatable at least for downlink information; means for applying the configuration information to determine, per a slot in a downlink control channel, whether the slot is of a first type that is not for carrying any uplink grant information or of a second type that is for carrying at least uplink grant information; and means for determining a search space for blind decoding for uplink grant information to be a space comprising slots of the second type and not slots of the first type.

According to an embodiment, there is provided an apparatus comprising means for transmitting in a radio resource control information configuration information that at least indicates slots usable for carrying uplink grant information among slots allocatable at least for downlink information; means for applying the configuration information to determine, per a slot in a downlink control channel, whether the slot is of a first type that is not for carrying any uplink grant information or of a second type that is for carrying at least uplink grant information; means for transmitting at least uplink grant information in the slots of the second type; and means for transmitting downlink information at least in the slots of the first type.

The apparatus 801, 1001 may comprise one or more communication control circuitry 820, 1020, such as at least one processor, and at least one memory 830, including one or more algorithms 831, 1031, such as a computer program code (software) wherein the at least one memory and the computer program code (software) are configured, with the at least one processor, to cause the apparatus to carry out any one of the exemplified functionalities of a corresponding apparatus, described above with any of Fig. 1 to Fig. 5. Said at least one memory 830, 1030 may also comprise at least one database 832, 1032.

Referring to Fig. 8, the one or more communication control circuitries 820 of the apparatus 801 comprise at least an enhanced blind decoding (b-d) circuitry 821 which is configured to perform search space determination related functionalities, e.g. determine slots types and search space(s) for blind decoding for uplink grant information. To this end, the enhanced blind decoding circuitry 821 of the apparatus 801 is configured to carry out at least some of the functionalities described above, e.g., by means of Fig. 1, Fig. 2, Fig. 4 and Fig. 5, using one or more individual circuitries.

Referring to Fig. 8, the memory 830 may be implemented using any suitable data storage technology, such as semiconductor based memory devices, flash memory, magnetic memory devices and systems, optical memory devices and systems, fixed memory and removable memory.

Referring to Fig. 8, the apparatus 801 may further comprise different interfaces 810 such as one or more communication interfaces (TX/RX) comprising hardware and/or software for realizing communication connectivity according to one or more communication protocols. The one or more communication interfaces 810 may enable connecting to the Internet and/or to a core network of a wireless communications network and/or to a radio access network and/or to other apparatuses within range of the apparatus. The one or more communication interface 810 may provide the apparatus with communication capabilities to communicate in a cellular communication system and enable communication to different network nodes or elements. The one or more communication interfaces 810 may comprise standard well-known components such as an amplifier, filter, frequency-converter, (de)modulator, and encoder/decoder circuitries, controlled by the corresponding controlling units, and possibly one or more antennas.

In an embodiment, as shown in Fig. 9, at least some of the functionalities of the apparatus of Fig. 8 may be shared between two physically separate devices, forming one operational entity. Therefore, the apparatus may be seen to depict the operational entity comprising one or more physically separate devices for executing at least some of the described processes. Thus, the apparatus of Fig. 9, utilizing such shared architecture, may comprise a control unit CU 920, or a remote control unit, such as a host computer or a server computer, operatively coupled (e.g. via a wireless or wired connection) to a remote distributed unit DU 922 located in the mobile apparatus or in a remote head of the mobile apparatus. In an embodiment, at least some of the described processes may be performed by the CU 920. In an embodiment, the execution of at least some of the described processes may be shared among the DU 922 and the CU 920.

Similar to Fig. 8, the apparatus of Fig. 9 may comprise one or more communication control circuitries (CNTL) 820, such as at least one processor, and at least one memory (MEM) 830, including one or more algorithms (PROG) 831, such as a computer program code (software) wherein the at least one memory and the computer program code (software) are configured, with the at least one processor, to cause the apparatus to carry out any one of the exemplified functionalities of the apparatus, which receives radio resource control information, described above, e.g., by means of e.g., by means of Fig. 1, Fig. 2, Fig. 4 and Fig. 5.

Referring to Fig. 10, the one or more communication control circuitry 1020 of the apparatus 1001 comprise at least an enhanced grant transmission circuitry 1021, which is configured to use slots of different types with different grant information, that are discussed with Fig. 1 to Fig. 5. To this end, the enhanced grant transmission circuitry 1021 of the apparatus 1001 is configured to carry out at least some of the functionalities of the apparatus transmitting radio resource control information, described above, e.g., by means of Fig. 1, and Fig. 3, Fig. 4 and Fig. 5, for example, using one or more individual circuitries.

Referring to Fig. 10, the memory 1030 may be implemented using any suitable data storage technology, such as semiconductor based memory devices, flash memory, magnetic memory devices and systems, optical memory devices and systems, fixed memory and removable memory.

Referring to Fig. 10, the apparatus 1001 may further comprise different interfaces 1010 such as one or more communication interfaces (TX/RX) comprising hardware and/or software for realizing communication connectivity according to one or more communication protocols. The one or more communication interfaces 1010 may enable connecting to the Internet and/or to a core network of a wireless communications network. The one or more communication interface 1010 may provide the apparatus with communication capabilities to communicate in a cellular communication system and enable communication to different network nodes or elements or device components, e.g., mobile apparatuses, such as terminal devices or user equipments, for example. The one or more communication interfaces 1010 may comprise standard well-known components such as an amplifier, filter, frequency-converter, (de)modulator, and encoder/decoder circuitries, controlled by the corresponding controlling units, and one or more antennas.

In an embodiment, as shown in Fig. 11, at least some of the functionalities of the apparatus of Fig. 10 may be shared between two physically separate devices, forming one operational entity. Therefore, the apparatus may be seen to depict the operational entity comprising one or more physically separate devices for executing at least some of the described processes. Thus, the apparatus of Fig. 11, utilizing such shared architecture, may comprise a control unit CU 1120, or a remote control unit, such as a host computer or a server computer, operatively coupled (e.g. via a wireless or wired network) to a remote distributed unit DU 1122 located in an access network apparatus, e.g., a base station. In an embodiment, at least some of the described processes may be performed by the CU 1120. In an embodiment, the execution of at least some of the described processes may be shared among the DU 1122 and the CU 1120.

Similar to Fig. 10, the apparatus of Fig. 11 may comprise one or more communication control circuitries (CNTL) 1020, such as at least one processor, and at least one memory (MEM) 1030, including one or more algorithms (PROG) 1031, such as a computer program code (software) wherein the at least one memory and the computer program code (software) are configured, with the at least one processor, to cause the apparatus to carry out any one of the exemplified functionalities of the apparatus described above, e.g., by means of Fig. 1, and Fig. 3, Fig. 4 and Fig. 5.

In embodiments, the CU 920, 1120 may generate a virtual network through which the CU 920, 1120 communicates with the DU 922, 1122. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the CU). External network virtualization is targeted to optimized network sharing. Another category is internal virtual networking which provides network-like functionality to the software containers on a single system. Virtual networking may also be used for testing the terminal device.

In embodiments, the virtual network may provide flexible distribution of operations between the DU and the CU. In practice, any digital signal processing task may be performed in either the DU or the CU and the boundary where the responsibility is shifted between the DU and the CU may be selected according to implementation.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Fig. 1 to Fig. 5 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 1 to Fig. 5 or operations thereof.

Embodiments and examples as described may also be carried out in the form of a computer process defined by a computer program or portions thereof. Embodiments of the functionalities described in connection with Fig. 1 to Fig. 5 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., RAM vs. ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus comprising at least one processor and at least one memory storing instructions that, when executed by the at least one processor, cause the apparatus at least to:
receive (201) in a radio resource control information configuration information that at least indicates slots usable for carrying uplink grant information among slots allocatable at least for downlink information;
apply (202) the configuration information to determine, per a slot in a downlink control channel, whether the slot is of a first type that is not for carrying any uplink grant information or of a second type that is for carrying at least uplink grant information; and
determine (203) a search space for blind decoding for uplink grant information to be a space comprising slots of the second type and not slots of the first type.

2. The apparatus of claim 1, wherein the at least one processor and the at least one memory storing instructions, when executed by the at least one processor, further cause the apparatus to use at least one value for a scheduled offset comprised in the configuration information to determine a slot type.

3. The apparatus of claim 1 or 2, wherein the at least one processor and the at least one memory storing instructions, when executed by the at least one processor, further cause the apparatus to use at least one search space configuration included in the configuration information, a search space configuration specifying the search space either for slots of the first type or for slots of the second type.

4. The apparatus of any preceding claim, wherein the slots allocatable at least for downlink information are slots comprising downlink control information in the downlink control channel, and wherein the first type is for downlink grants and the second type is at least for uplink grants.

5. The apparatus of any preceding claim, wherein the slots of the second type comprises non-mixed slots for carrying uplink grant information and mixed slots for carrying downlink grant information and uplink grant information, wherein the at least one processor and the at least one memory storing instructions, when executed by the at least one processor, further cause the apparatus determine a search space for blind decoding for downlink grant information to be a space comprising slots of the first type and the mixed slots.

6. An apparatus comprising at least one processor and at least one memory storing instructions that, when executed by the at least one processor, cause the apparatus at least to:
transmit (301) in a radio resource control information configuration information that at least indicates slots usable for carrying uplink grant information among slots allocatable at least for downlink information;
apply (302) the configuration information to determine, per a slot in a downlink control channel, whether the slot is of a first type that is not for carrying any uplink grant information or of a second type that is for carrying at least uplink grant information;
transmit (303) at least uplink grant information in the slots of the second type; and
transmit (303) downlink information at least in the slots of the first type.

7. The apparatus of claim 6, wherein the at least one processor and the at least one memory storing instructions, when executed by the at least one processor, further cause the apparatus at least to use at least one value for a scheduled offset comprised in the configuration information to determine a slot type.

8. The apparatus of claim 6 or 7, wherein the at least one processor and the at least one memory storing instructions, when executed by the at least one processor, further cause the apparatus to
include to the configuration information, before transmitting the radio resource control information, at least one search space configuration, a search space configuration specifying the search space either for slots of the first type or for slots of the second type.

9. The apparatus of claim 6, 7 or 8, wherein the slots allocatable at least for downlink information are slots comprising downlink control information in the downlink control channel, and wherein the first type is for downlink grants and the second type is at least for uplink grants.

10. The apparatus of claim 9, wherein a slot of the second type is either a non-mixed slot for uplink grants or a mixed slot for both downlink grants and uplink grants.

11. The apparatus of any preceding claim, wherein the radio resource control information is for time division duplex communication.

12. A method comprising:
receiving (201) in a radio resource control information configuration information that at least indicates slots usable for carrying uplink grant information among slots allocatable at least for downlink information;
applying (202) the configuration information to determine, per a slot in a downlink control channel, whether the slot is of a first type that is not for carrying any uplink grant information or of a second type that is for carrying at least uplink grant information; and
determining (203) a search space for blind decoding for uplink grant information to be a space comprising slots of the second type and not slots of the first type.

13. A method comprising:
transmitting (301) in a radio resource control information configuration information that at least indicates slots usable for carrying uplink grant information among slots allocatable at least for downlink information;
applying (302) the configuration information to determine, per a slot in a downlink control channel, whether the slot is of a first type that is not for carrying any uplink grant information or of a second type that is for carrying at least uplink grant information;
transmitting (303) at least uplink grant information in the slots of the second type; and
transmitting downlink information at least in the slots of the first type.

14. A computer readable medium comprising instructions which, when executed by an apparatus, cause the apparatus to perform at least one of a first process or a second process,
wherein the first process comprises at least:
receiving (201) in a radio resource control information configuration information that at least indicates slots usable for carrying uplink grant information among slots allocatable at least for downlink information;
applying (202) the configuration information to determine, per a slot in a downlink control channel, whether the slot is of a first type that is not for carrying any uplink grant information or of a second type that is for carrying at least uplink grant information; and
determining (203) a search space for blind decoding for uplink grant information to be a space comprising slots of the second type and not slots of the first type,
wherein the second process comprises at least:
transmitting (301) in a radio resource control information configuration information that at least indicates slots usable for carrying uplink grant information among slots allocatable at least for downlink information;
applying (302) the configuration information to determine, per a slot in a downlink control channel, whether the slot is of a first type that is not for carrying any uplink grant information or of a second type that is for carrying at least uplink grant information;
transmitting (303) at least uplink grant information in the slots of the second type; and
transmitting (303) downlink information at least in the slots of the first type, wherein for example
the computer readable medium is a non-transitory computer readable medium.

15. A computer program comprising instructions, which, when executed by an apparatus, cause the apparatus to perform at least one of a first process or a second process,
wherein the first process comprises at least:
receiving in a radio resource control information configuration information that at least indicates slots usable for carrying uplink grant information among slots allocatable at least for downlink information;
applying the configuration information to determine, per a slot in a downlink control channel, whether the slot is of a first type that is not for carrying any uplink grant information or of a second type that is for carrying at least uplink grant information; and
determining a search space for blind decoding for uplink grant information to be a space comprising slots of the second type and not slots of the first type,
wherein the second process comprises at least:
transmitting in a radio resource control information configuration information that at least indicates slots usable for carrying uplink grant information among slots allocatable at least for downlink information;
applying the configuration information to determine, per a slot in a downlink control channel, whether the slot is of a first type that is not for carrying any uplink grant information or of a second type that is for carrying at least uplink grant information;
transmitting at least uplink grant information in the slots of the second type; and
transmitting downlink information at least in the slots of the first type.
